# FASCICULE DE BREVET EUROPEEN

(11) **EP 3 296 145 B1**
(45) Date de publication et mention de la délivrance du brevet: **03.08.2022**
(21) Numéro de dépôt: 17190948.4
(22) Date de dépôt: 13.09.2017
(51) Int. Cl.: B60L 53/00

(54) **RÉSEAU DE TRANSPORT PUBLIC À GESTION D'ÉNERGIE ÉLECTRIQUE OPTIMISÉE**
ÖFFENTLICHES TRANSPORTNETZ MIT OPTIMIERTER VERWALTUNG DER ELEKTRISCHEN ENERGIE
A PUBLIC TRANSPORT NETWORK WITH AN OPTIMIZED MANAGEMENT OF ELECTRIC ENERGY

(30) Priorité: 15.09.2016 FR 1658633
(43) Date de publication de la demande: 21.03.2018
(73) Titulaire: ALSTOM Transport Technologies, 93400 Saint-Ouen (FR)
(72) Inventeur: MUSSET, Sébastien, 17220 Sainte Soulle (FR)
(74) Mandataire: Lavoix

(56) Documents cités:
- EP-A2- 1 228 919
- DE-A1-102011 076 787
- US-A- 3 955 657
- US-A1- 2013 006 677
- US-A1- 2013 221 918
- US-A1- 2015 027 837
- YI PING ET AL: "Deploying Energy Routers in an Energy Internet Based on Electric Vehicles", IEEE TRANSACTIONS ON VEHICULAR TECHNOLOGY, IEEE SERVICE CENTER, PISCATAWAY, NJ, US, vol. 65, no. 6, 1 June 2016 (2016-06-01), pages 4714-4725, XP011614347, ISSN: 0018-9545, DOI: 10.1109/TVT.2016.2549269 [retrieved on 2016-06-16]
- XIAOMIN LU ET AL: "Development of a bi-directional off-board level-3 quick charging station for electric bus", TRANSPORTATION ELECTRIFICATION CONFERENCE AND EXPO (ITEC), 2012 IEEE, IEEE, 18 June 2012 (2012-06-18), pages 1-6, XP032204841, DOI: 10.1109/ITEC.2012.6243500 ISBN: 978-1-4673-1407-7

## Description

La présente invention concerne un réseau de transport public.

Par exemple, le réseau de transport public est un réseau ferroviaire urbain, notamment un réseau de tramway.

Plus particulièrement, l'invention concerne un réseau de transport public, présentant au moins un trajet et comportant au moins un véhicule de transport public circulant sur le trajet, et dans lequel :
- chaque véhicule comporte des moyens de stockage d'énergie électrique, et des moyens de propulsion alimentés de manière autonome par les moyens de stockage d'énergie,
- le réseau de transport comporte une pluralité de zones d'échange d'énergie électrique, réparties le long du trajet de manière non contiguë,
- chaque véhicule comporte des moyens d'échange d'énergie électrique, connectés aux moyens de stockage, et propres à échanger de l'énergie avec chaque zone d'échange d'énergie lorsque ces moyens d'échange d'énergie sont connectés avec cette zone d'échange d'énergie.

Par exemple, le réseau de transport public comporte un Système de Recharge Statique par le sol (SRS), connu en soi. Tels réseaux sont connus par exemple par US 2015/0027837 et l'article « Deploying Energy Routers in an Energy Internet Based on Electric Vehicles » de la revue IEEE Transactions on Vehicular Technology.

Un tel système permet aux véhicules de recharger leurs moyens de stockage d'énergie lorsqu'ils passent sur une zone d'échange d'énergie. Un tel système permet une recharge rapide des moyens de stockage, notamment sur une durée inférieure à 40s. Ainsi, par exemple, lorsqu'une zone d'échange est disposée à une station, le véhicule peut recharger ses moyens de stockage lors de la montée et de la descente de voyageurs à cette station.

La présente invention a notamment pour but d'améliorer un tel système, notamment en permettant une économie d'énergie, et en améliorant la durée de vie des composants électroniques du véhicule.

A cet effet, l'invention revendiquée par la revendication indépendante 1 a notamment pour objet un réseau de transport public, présentant au moins un trajet et comportant au moins un véhicule de transport public circulant sur le trajet, et dans lequel :
- chaque véhicule comporte des moyens de stockage d'énergie, et des moyens de propulsion alimentés de manière autonome par les moyens de stockage d'énergie,
- le réseau de transport comporte une pluralité de zones d'échange d'énergie, réparties le long du trajet de manière discrète,
- chaque véhicule comporte des moyens d'échange d'énergie, connectés aux moyens de stockage, et propres à échanger de l'énergie avec chaque zone d'échange d'énergie lorsque ces moyens d'échange d'énergie sont connectés avec cette zone d'échange d'énergie,
caractérisé en ce que :
- le réseau de transport comporte des moyens de détermination propres à déterminer si chaque véhicule connecté avec l'une des zones d'échange d'énergie présente un besoin ou un surplus d'énergie,
- les moyens d'échange d'énergie de chaque véhicule sont configurés pour que les moyens de stockage d'énergie cèdent de l'énergie à la zone d'échange d'énergie lorsque ce véhicule est déterminé comme présentant un surplus d'énergie, de manière statique avec un courant supérieur à 300A, pendant une durée de décharge inférieure à 40s.

L'invention prévoit de céder l'énergie en surplus depuis les véhicules vers le réseau de transport. Cette énergie cédée peut alors être stockée sur le réseau de transport ou transmise à d'autres véhicules en besoin d'énergie.

Il est ainsi possible d'effectuer une meilleure gestion de l'énergie dans le réseau de transport, ce qui permet une économie d'énergie.

En particulier, l'énergie en surplus n'est plus stockée lors des périodes d'attente, notamment de remisage en dépôt, une telle énergie stockée étant habituellement perdue par décharge durant ces périodes d'attente.

En outre, les composants électroniques du véhicule sont moins sollicités par des périodes d'attente, si bien que leur durée de vie augmente.

Enfin, lors des maintenances du véhicule, l'énergie en surplus peut être fournie au réseau de transport plutôt que d'être perdue dans des résistances de décharge.

L'invention prévoit par ailleurs une décharge rapide (moins de 40s) à un courant maximal (supérieur à 300A), de manière à permettre un transfert d'énergie efficace sur une courte durée, évitant ainsi d'immobiliser le véhicule trop longtemps. Il est alors par exemple possible d'effectuer une telle décharge en station, lors de la montée et de la descente de passagers.

L'homme du métier saura réaliser de tels moyens de transfert d'énergie, notamment en s'inspirant de la technologie SRS évoquée précédemment, en autorisant un transfert d'énergie dans les deux sens.

Un réseau de transport public selon l'invention peut comporter en outre l'une ou plusieurs des caractéristiques techniques suivantes, prises seules ou selon toutes combinaisons techniquement envisageables.
- Les moyens d'échange d'énergie de chaque véhicule sont configurés pour que les moyens de stockage d'énergie cèdent de l'énergie à la zone d'échange d'énergie avec un courant sensiblement égal à 1600A.
- Les moyens d'échange d'énergie de chaque véhicule sont configurés pour que les moyens de stockage d'énergie cèdent de l'énergie à la zone d'échange d'énergie pendant une durée de décharge sensiblement égale à 20s.
- Chaque zone d'échange d'énergie présente une longueur, dans une direction de déplacement des véhicules, inférieure ou égale à une longueur moyenne des véhicules, de préférence inférieure à 10m, de préférence encore sensiblement égale à 3m.
- Les moyens d'échange d'énergie et les zones d'échange forment un système de recharge statique.
- Le réseau de transport public comporte des moyens de répartition d'énergie, propres à commander la transmission de l'énergie à tout véhicule connecté à une zone d'échange d'énergie et étant déterminé comme présentant un besoin d'énergie.
- Les moyens de répartition d'énergie sont configurés pour que l'énergie transmise au véhicule en besoin d'énergie provienne d'un véhicule connecté à une zone d'échange d'énergie et étant déterminé comme présentant un surplus d'énergie.
- Le réseau de transport public comporte au moins une unité de stockage d'énergie fixe, connectée aux zones d'échanges d'énergie, et dans lequel les moyens de répartition d'énergie sont configurés pour que l'énergie transmise au véhicule en besoin d'énergie provienne de l'unité de stockage fixe.
- Les moyens de détermination sont configurés pour prévoir, à chaque zone d'échange, quelle énergie est nécessaire pour atteindre la zone d'échange adjacente suivante sur le trajet.

L'invention concerne également un procédé de gestion d'un réseau de transport public tel que défini précédemment, et revendiquée par la revendication indépendante 10, caractérisé en ce qu'il comporte :
- lorsqu'un véhicule est connecté à une zone d'échange d'énergie, la détermination d'un besoin ou d'un surplus d'énergie dans ce véhicule,
- en situation de surplus d'énergie, la cession d'énergie, depuis les moyens de stockage d'énergie de ce véhicule, vers la zone d'échange d'énergie, de manière statique avec un courant supérieur à 300A, pendant une durée de décharge inférieure à 40s.

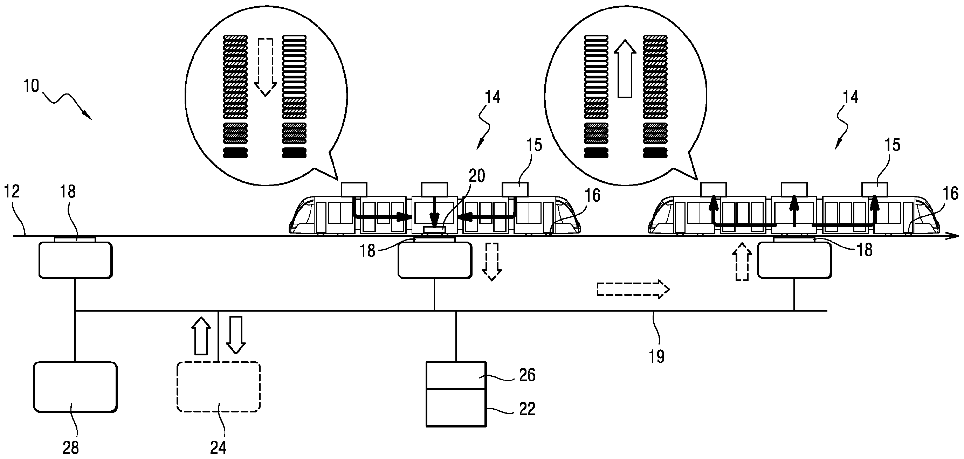

L'invention sera mieux comprise à la lecture de la description qui va suivre, donnée uniquement à titre d'exemple et faite en se référant à la figure annexée, représentant schématiquement un réseau de transport public selon un exemple de mode de réalisation de l'invention.

On a représenté, sur la figure, un réseau 10 de transport public, notamment un réseau de tramway.

Le réseau de transport 10 présente au moins un trajet 12, sur lequel circule au moins un véhicule de transport public 14, et de préférence une pluralité de véhicules 14.

Le trajet 12 est par exemple matérialisé par une voie ferrée.

Chaque véhicule 14 comporte des moyens de stockage d'énergie 15, et des moyens de propulsion 16 alimentés de manière autonome par les moyens de stockage d'énergie 15. Ainsi, le véhicule 14 est susceptible d'être propulsé sans nécessiter d'être alimenté en continu. Le réseau de transport 10 est donc dépourvu de caténaire, ou de tout autre moyen d'alimentation en continu.

En revanche, le réseau de transport 10 comporte une pluralité de zones d'échange d'énergie 18, réparties le long du trajet 12 de manière discrète, c'est-à-dire non-continue. En d'autres termes, les zones d'échange d'énergie 18 ne sont pas contigües, mais séparées par des zones neutres ne permettant pas l'échange d'énergie.

Chaque zone d'échange d'énergie 18 présente, par exemple, une longueur dans une direction de déplacement des véhicules 14, sensiblement égale à la longueur moyenne des véhicules 14, de préférence inférieure ou égale à la longueur moyenne des véhicules 14.

Avantageusement, chaque zone d'échange d'énergie 18 présente une longueur, dans une direction de déplacement des véhicules 14, inférieure à 10m, de préférence sensiblement égale à 3m.

Deux zones d'échange 18 successives sont par exemple espacées l'une de l'autre d'une distance supérieure à 100m.

Les zones d'échange 18 sont reliées électriquement entre elles, par un réseau électrique 19, de manière classique.

Chaque véhicule 14 est susceptible d'être connecté à chaque zone d'échange 18, par l'intermédiaire de moyens 20 d'échange d'énergie portés par ce véhicule.

Les moyens d'échange d'énergie 20 comportent notamment un capteur, propre à entrer en contact avec un élément compatible de la zone d'échange 18. Par exemple, le capteur est un balai métallique, et l'élément compatible est une surface conductrice sur laquelle le balai métallique est destiné à passer.

Les moyens d'échange d'énergie 20 sont propres à échanger de l'énergie avec chaque zone d'échange d'énergie 18 lorsque ces moyens d'échange d'énergie 20 sont connectés avec cette zone d'échange d'énergie 18.

Les moyens d'échange d'énergie 20 sont connectés aux moyens de stockage 15, de manière connue en soi.

Les moyens d'échange d'énergie 20 sont configurés pour que les moyens de stockage d'énergie 15 soient susceptibles de céder de l'énergie à la zone d'échange d'énergie 18.

Par exemple, les moyens d'échange d'énergie 20 sont similaires à ceux utilisés dans un Système de Recharge Statique par le sol (SRS), adaptés pour permettre un échange d'énergie dans les deux sens. L'homme du métier saura effectuer une telle adaptation.

En variante, les moyens d'échange d'énergie 20 et les zones d'échange 18 forment un système de rechargement en toiture. Dans cette variante, les moyens d'échange d'énergie 20 comprennent, par exemple, au moins un pantographe et les zones d'échange 18 sont équipées d'au moins une caténaire.

Plus généralement tout type de système de rechargement en station peut être envisagé.

Ainsi, dans une situation de recharge, les moyens d'échange d'énergie 20 sont propres à capter de l'énergie depuis la zone d'échange d'énergie 18, pour la transmettre aux moyens de stockage 15, de manière classique, par exemple de la même manière que dans un système SRS classique.

En revanche, dans une situation de décharge, les moyens d'échange d'énergie 20 sont propres à transmettre de l'énergie depuis les moyens de stockage 15, pour la transmettre à la zone d'échange d'énergie 18.

Dans une situation comme dans l'autre, l'énergie électrique est transmise de manière statique avec un courant supérieur à 300A, pendant une durée inférieure à 40 s.

De préférence, l'énergie électrique est transmise de manière statique avec un courant sensiblement égal à 1600A.

De préférence, l'énergie électrique est transmise pendant une durée sensiblement égale à 20 s.

Ainsi, on permet un transfert d'énergie efficace sur une courte durée, évitant ainsi d'immobiliser le véhicule trop longtemps. Il est alors par exemple possible d'effectuer une telle décharge en station, lors de la montée et de la descente de passagers.

Il est à noter que le réseau de transport 10 comporte des moyens de détermination 22, propres à déterminer si chaque véhicule 14 connecté avec l'une des zones d'échange d'énergie 18 présente un besoin ou un surplus d'énergie.

Les moyens de détermination 22 sont par exemple fixes et propres à transmettre à chaque véhicule 14 son état de besoin ou de surplus d'énergie.

En variante, chaque véhicule 14 porte des moyens de détermination 22 qui lui sont propres.

Les moyens de détermination 22 sont configurés pour prévoir, à chaque zone d'échange 18, quelle énergie est nécessaire pour atteindre la zone d'échange 18 adjacente suivante sur le trajet. Par exemple, si le trajet comporte des montées entre les zones d'échanges 18, le besoin en énergie sera important. Au contraire, si le trajet comporte davantage de descentes entre les zones d'échanges 18, le besoin en énergie sera faible, et pourra impliquer un surplus d'énergie.

On notera que l'énergie en surplus est notamment de l'énergie récupérée par freinage par des moyens classiques, en utilisant les moteurs en tant que génératrice lors du freinage.

Lorsqu'il arrive à une zone d'échange 18, un véhicule 14 en besoin d'énergie sera mis en situation de charge (véhicule représenté à droite sur la figure), et un véhicule 14 en surplus d'énergie sera mis en situation de décharge (véhicule représenté à gauche sur la figure).

Par exemple, l'énergie cédée par le véhicule 14 en surplus d'énergie est directement transmise au véhicule 14 en besoin d'énergie, à travers le réseau électrique 19, à condition qu'ils soient chacun connecté au même moment à une zone d'échange 18 respective.

Avantageusement, le réseau électrique 19 comporte au moins une unité 24 de stockage d'énergie fixe, connectée aux zones d'échanges d'énergie 18, destinée à stocker de l'énergie cédée par chaque véhicules 14 en surplus d'énergie. Ainsi, il est possible de stocker de l'énergie électrique provenant d'un véhicule en surplus d'énergie, à destination d'un véhicule en besoin d'énergie, lorsque ce véhicule en besoin d'énergie n'est pas connecté à une zone d'échange 18 au même moment que le véhicule en surplus d'énergie.

Les moyens de détermination 22 sont avantageusement liés à des moyens 26 de répartition d'énergie, permettant de gérer les transmissions d'énergie dans le réseau de transport 10. Ainsi, les moyens de répartition 26 sont propres à commander une transmission d'énergie à tout véhicule 14 connecté à une zone d'échange d'énergie 18 et étant déterminé comme présentant un besoin d'énergie.

Les moyens de répartition d'énergie 26 sont configurés pour que l'énergie transmise au véhicule 14 en besoin d'énergie provienne d'un véhicule connecté à une autre zone d'échange d'énergie 18 et étant déterminé comme présentant un surplus d'énergie, ou pour que l'énergie transmise au véhicule 14 en besoin d'énergie provienne de l'unité de stockage fixe 24.

Le réseau de transport 10 peut par ailleurs comporter divers équipements électriques 28, qui sont alors avantageusement alimentés par le réseau électrique 19, donc dans certains cas par l'énergie fournie par les véhicules en surplus d'énergie.

L'énergie fournie par les véhicules en surplus d'énergie peut également être utilisée pour stabiliser le réseau électrique 19. A cet effet, les moyens de stockage 15 de chaque véhicule forment des stabilisateurs lorsqu'ils se connectent aux zones d'échange 18.

Le réseau de transport public 10 selon l'invention est géré par un procédé de gestion qui va maintenant être décrit.

Lorsqu'un véhicule 14 est connecté à une zone d'échange d'énergie 18, le procédé prévoit la détermination d'un besoin ou d'un surplus d'énergie dans ce véhicule 14. Cette détermination dépend principalement de l'énergie nécessaire pour atteindre la zone d'échange d'énergie adjacente suivante sur le trajet 12.

En situation de surplus d'énergie, de l'énergie est cédée, depuis les moyens de stockage d'énergie 15 de ce véhicule 14, vers la zone d'échange d'énergie 18, de manière statique avec un courant supérieur à 300A, pendant une durée de décharge inférieure à 40s.

Cette énergie est ensuite stockée dans l'unité de stockage fixe 24, ou transférée vers un véhicule en besoin d'énergie connecté au même moment à une autre zone d'échange d'énergie 18.

En situation de besoin d'énergie, de l'énergie est fournie, depuis la zone d'échange d'énergie 18 vers les moyens de stockage d'énergie 15 de ce véhicule. Cette énergie provient de l'unité de stockage fixe 24, ou d'un véhicule en surplus d'énergie connecté au même moment à une autre zone d'échange d'énergie 18.

## Revendications

1. Réseau (10) de transport public, présentant au moins un trajet (12) et comportant au moins un véhicule de transport public (14) circulant sur le trajet (12), et dans lequel :
- chaque véhicule (14) comporte des moyens (15) de stockage d'énergie, et des moyens (16) de propulsion alimentés de manière autonome par les moyens de stockage d'énergie (15),
- le réseau de transport (10) comporte une pluralité de zones d'échange d'énergie (18), réparties le long du trajet (12) de manière discrète,
- chaque véhicule (14) comporte des moyens (20) d'échange d'énergie, connectés aux moyens de stockage (15), et propres à échanger de l'énergie avec chaque zone d'échange d'énergie (18) lorsque ces moyens d'échange d'énergie (20) sont connectés avec cette zone d'échange d'énergie (18),
**caractérisé en ce que** :
- le réseau de transport (10) comporte des moyens (22) de détermination propres à déterminer si chaque véhicule (14) connecté avec l'une des zones d'échange d'énergie (18) présente un besoin ou un surplus d'énergie,
- les moyens d'échange d'énergie (20) de chaque véhicule (14) sont configurés pour que les moyens de stockage d'énergie (15) cèdent de l'énergie à la zone d'échange d'énergie (18) lorsque ce véhicule est déterminé comme présentant un surplus d'énergie, de manière statique avec un courant supérieur à 300A, pendant une durée de décharge inférieure à 40s.

2. Réseau de transport public (10) selon la revendication 1, dans lequel les moyens d'échange d'énergie (20) de chaque véhicule (14) sont configurés pour que les moyens de stockage d'énergie (15) cèdent de l'énergie à la zone d'échange d'énergie (18) avec un courant sensiblement égal à 1600A.

3. Réseau de transport public (10) selon la revendication 1 ou 2, dans lequel les moyens d'échange d'énergie (20) de chaque véhicule (14) sont configurés pour que les moyens de stockage d'énergie (15) cèdent de l'énergie à la zone d'échange d'énergie (18) pendant une durée de décharge sensiblement égale à 20s.

4. Réseau de transport public (10) selon l'une quelconque des revendications précédentes, dans lequel chaque zone d'échange d'énergie (18) présente une longueur, dans une direction de déplacement des véhicules (14), inférieure ou égale à une longueur moyenne des véhicules, de préférence inférieure à 10m, de préférence encore sensiblement égale à 3m.

5. Réseau de transport public (10) selon l'une quelconque des revendications précédentes, dans lequel les moyens d'échange d'énergie (20) et les zones d'échange (18) forment un système de recharge statique.

6. Réseau de transport public (10) selon l'une quelconque des revendications précédentes, comportant des moyens (26) de répartition d'énergie, propres à commander la transmission de l'énergie à tout véhicule (14) connecté à une zone d'échange d'énergie (18) et étant déterminé comme présentant un besoin d'énergie.

7. Réseau de transport public (10) selon la revendication 6, dans lequel les moyens de répartition d'énergie (26) sont configurés pour que l'énergie transmise au véhicule en besoin d'énergie provienne d'un véhicule connecté à une zone d'échange d'énergie (18) et étant déterminé comme présentant un surplus d'énergie.

8. Réseau de transport public (10) selon la revendication 6 ou 7, comportant au moins une unité de stockage d'énergie fixe (24), connectée aux zones d'échanges d'énergie (18), et dans lequel les moyens de répartition d'énergie (26) sont configurés pour que l'énergie transmise au véhicule (14) en besoin d'énergie provienne de l'unité de stockage fixe (24).

9. Réseau de transport public (10) selon l'une quelconque des revendications précédentes, dans lequel les moyens de détermination (22) sont configurés pour prévoir, à chaque zone d'échange (18), quelle énergie est nécessaire pour atteindre la zone d'échange (18) adjacente suivante sur le trajet (12).

10. Procédé de gestion d'un réseau de transport public (10) selon l'une quelconque des revendications précédentes, **caractérisé en ce qu'**il comporte :
- lorsqu'un véhicule (14) est connecté à une zone d'échange d'énergie (18), la détermination d'un besoin ou d'un surplus d'énergie dans ce véhicule (14),
- en situation de surplus d'énergie, la cession d'énergie, depuis les moyens de stockage d'énergie (15) de ce véhicule (14), vers la zone d'échange d'énergie (18), de manière statique avec un courant supérieur à 300A, pendant une durée de décharge inférieure à 40s.

## Patentansprüche

1. Netz (10) öffentlichen Verkehrs, das mindestens eine Strecke (12) aufweist und mindestens ein öffentliches Verkehrsfahrzeug (14) umfasst, das auf der Strecke (12) fährt, und wobei:
- jedes Fahrzeug (14) Einrichtungen (15) zum Speichern von Energie und Einrichtungen (16) zum Antrieb umfasst, die von der Energiespeichereinrichtungen (15) autonom mit Energie versorgt wird,
- das Transportnetz (10) eine Vielzahl von Energieaustauschbereichen (18) aufweist, die separat entlang der Strecke (12) verteilt sind,
- jedes Fahrzeug (14) Einrichtungen (20) zum Austauschen von Energie umfasst, die mit den Speichereinrichtungen (15) verbunden und geeignet sind, Energie mit jeder Energieaustauschbereich (18) auszutauschen, wenn diese Energieaustauscheinrichtungen (20) mit diesem Energieaustauschbereich (18) verbunden sind,
**dadurch gekennzeichnet, dass**:
- das Transportnetz (10) eine Bestimmungseinrichtungen (22) umfasst, die geeignet ist, um zu bestimmen, ob jedes Fahrzeug (14), das mit einem der Energieaustauschbereiche (18) verbunden ist, einen Energiebedarf oder einen Energieüberschuss aufweist,
- die Energieaustauscheinrichtungen (20) jedes Fahrzeugs (14) konfiguriert sind, damit die Energiespeichereinrichtungen (15) Energie statisch mit einem Strom von mehr als 300 A über eine Entladungsdauer von weniger als 40 Sekunden an den Energieaustauschbereich (18) abgeben, wenn für dieses Fahrzeug bestimmt wird, dass es einen Energieüberschuss aufweist.

2. Öffentliches Verkehrsnetz (10) nach Anspruch 1, wobei die Energieaustauscheinrichtungen (20) von jedem Fahrzeug (14) konfiguriert sind, damit die Energiespeichereinrichtungen (15) Energie mit einem Strom, der im Wesentlichen gleich 1600 A ist, an den Energieaustauschbereich (18) abgeben.

3. Öffentliches Verkehrsnetz (10) nach Anspruch 1 oder 2, wobei die Energieaustauscheinrichtungen (20) von jedem Fahrzeug (14) konfiguriert sind, damit die Energiespeichereinrichtungen (15) Energie über eine Entladezeit, die im Wesentlichen gleich 20 Sekunden ist, an den Energieaustauschbereich (18) abgeben.

4. Öffentliches Verkehrsnetz (10) nach einem der vorherigen Ansprüche, wobei jeder Energieaustauschbereich (18) in einer Fahrtrichtung der Fahrzeuge (14) eine Länge aufweist, die kleiner als oder gleich wie eine durchschnittliche Länge der Fahrzeuge ist, vorzugsweise kleiner als 10 Meter, bevorzugter im Wesentlichen gleich wie 3 Meter.

5. Öffentliches Verkehrsnetz (10) nach einem der vorherigen Ansprüche, wobei die Energieaustauscheinrichtungen (20) und die Austauschbereiche (18) ein statisches Ladesystem bilden.

6. Öffentliches Verkehrsnetz (10) nach einem der vorherigen Ansprüche, umfassend Einrichtungen (26) zum Verteilen von Energie, die geeignet sind, um die Übertragung von Energie an jedes Fahrzeug (14) zu steuern, das mit einem Energieaustauschbereich (18) verbunden ist und wenn bestimmt wird, dass es einen Energiebedarf aufweist.

7. Öffentliches Verkehrsnetz (10) nach Anspruch 6, wobei die Energieverteilungseinrichtungen (26) konfiguriert sind, damit die an das energiebedürftige Fahrzeug übertragene Energie von einem Fahrzeug stammt, das mit einem Energieaustauschbereich (18) verbunden ist und wenn bestimmt wird, dass es einen Energieüberschuss aufweist.

8. Öffentliches Verkehrsnetz (10) nach Anspruch 6 oder 7, umfassend mindestens eine stationäre Energiespeichereinheit (24), die mit den Energieaustauschbereichen (18) verbunden ist, und wobei die Energieverteilungseinrichtungen (26) konfiguriert sind, damit die an das energiebedürftige Fahrzeug (14) übertragene Energie aus der stationären Speichereinheit (24) stammt.

9. Öffentliches Verkehrsnetz (10) nach einem der vorherigen Ansprüche, wobei die Bestimmungseinrichtungen (22) konfiguriert sind, um an jedem Austauschbereich (18) vorherzusagen, welche Energie erforderlich ist, um den nächsten benachbarten Austauschbereich (18) auf der Strecke (12) zu erreichen.

10. Verfahren zur Verwaltung eines öffentlichen Verkehrsnetzes (10) nach einem der vorherigen Ansprüche, **dadurch gekennzeichnet, dass** es Folgendes umfasst:
- wenn ein Fahrzeug (14) mit einem Energieaustauschbereich (18) verbunden ist, das Bestimmen eines Bedarfs oder eines Überschusses an Energie in diesem Fahrzeug (14),
- in einer Energieüberschusssituation das Abgeben von Energie von den Energiespeichereinrichtungen (15) dieses Fahrzeugs (14) an den Energieaustauschbereich (18) statisch mit einem Strom von mehr als 300 A über eine Entladungsdauer von weniger als 40 Sekunden.

## Claims

1. A public transport network (10), having at least one route (12) and including at least one public transport vehicle (14) travelling on the route (12), and in which:
- each vehicle (14) comprises the energy storage means (15) for storing electrical energy, and the propulsion means (16) that are supplied with energy in an autonomous manner by the energy storage means (15);
- the transport network (10) comprises a plurality of energy exchange zones (18) for exchanging electrical energy, distributed along the route (12) in a discrete manner;
- each vehicle (14) comprises the energy exchange means (20) for exchanging electrical energy, connected to the energy storage means (15), and capable of exchanging energy with each energy exchange zone (18) when these energy exchange means (20) are connected with this energy exchange zone (18),
**characterised in that**:
- the transport network (10) comprises the determination means (22) that are capable of determining whether each vehicle (14) connected with one of the energy exchange zones (18) has an energy need or an energy surplus;
- the energy exchange means (20) of each vehicle (14) are configured so as to ensure that the energy storage means (15) transfer energy to the energy exchange zone (18) when this vehicle is determined to have a surplus of energy, in a static manner with a current that is higher than 300 A, over a discharge time period of less than 40 seconds.

2. A public transport network (10) according to claim 1, in which the energy exchange means (20) of each vehicle (14) are configured so as to ensure that the energy storage means (15) transfer energy to the energy exchange zone (18) with a current that is substantially equal to 1600 A.

3. A public transport network (10) according to claims 1 or 2, in which the energy exchange means (20) of each vehicle (14) are configured so as to ensure that the energy storage means (15) transfer energy to the energy exchange zone (18) over a discharge time period that is substantially equal to 20 seconds.

4. A public transport network (10) according to any one of the preceding claims, in which each energy exchange zone (18) extends over a length in a direction of travel of the vehicles (14) that is less than or equal to an average length of the vehicles, preferably less than 10 m, more preferably substantially equal to 3 m.

5. A public transport network (10) according to any one of the preceding claims, in which the energy exchange means (20) and the energy exchange zones (18) form a static charging system.

6. A public transport network (10) according to any one of the preceding claims, comprising the energy distribution means (26), that are capable of controlling the transmission of energy to any vehicle (14) that is connected to an energy exchange zone (18) and that is determined to be having a need for energy.

7. A public transport network (10) according to claim 6, in which the energy distribution means (26) are configured so as to ensure that the energy transmitted to the vehicle in need of energy comes from a vehicle that is connected to an energy exchange zone (18) and that is determined to be having an energy surplus.

8. A public transport network (10) according to claims 6 or 7, comprising at least one fixed energy storage unit (24) connected to the energy exchange zones (18), and in which the energy distribution means (26) are configured so as to ensure that the energy transmitted to the vehicle (14) in need of energy comes from the fixed energy storage unit (24).

9. A public transport network (10) according to any one of the preceding claims, in which the determination means (22) are configured so as to predict, at each energy exchange zone (18), the energy that is required in order to reach the next adjacent energy exchange zone (18) on the route (12).

10. A network management method for managing a public transport network (10) according to any one of the preceding claims, **characterised in that** it includes:
- when a vehicle (14) is connected to an energy exchange zone (18), the determination of an energy need or an energy surplus in this vehicle (14);
- in a situation of an energy surplus, the transfer of energy, from the energy storage means (15) of this vehicle (14) to the energy exchange zone (18), in a static manner with a current that is higher than 300 A, over a discharge time period of less than 40 seconds.
